# EUROPEAN PATENT APPLICATION

(11) **EP 1 942 495 A1**
(43) Date of publication of application: **09.07.2008**
(21) Application number: 07100096.2
(22) Date of filing: 04.01.2007
(51) Int. Cl.: G11B 7/09

(54) **Pickup for accessing moving storage media and drive having the pickup**

(71) Applicant: Deutsche Thomson OHG, 30625 Hannover (DE)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(57) **Abstract**

A pickup (P) for accessing moving storage media (D) carrying substantially parallel information tracks (T) has a carrier (C), a movable actuator (A) with a lens (3) and suspension means joining the carrier (C) and the actuator (A). The actuator (A) carries coils. The pickup (P) has a magnet configuration, which is connected to the carrier (C), with at least one multipolar magnet (6) having two ore more poles (12, 13, 14 and 15). In a section of the multipolar magnet (6), which faces one of the coils, two opposing magnetic poles (12, 13) adjoin along a first separation line (16). The separation line (16) has a first line part (18) and a second line part (19), where the widths of corresponding pole parts (20, 21) of at least one of the adjoining magnetic poles (12, 13) differ. According to the invention at least one magnetically active element (22, 23) increasing or decreasing the magnetic flux is attached to the multipolar magnet (9) at at least one of the pole parts (20, 21) with different widths.

## Description

### BACKGROUND OF THE INVENTION

### FIELD OF THE INVENTION

The present invention is related to a pickup for accessing moving storage media according to the preamble of claim 1. Pickups are used as part of a recording and/or reproducing apparatus, e. g. of a DVD player, a DVD recorder or of similar apparatuses.

### DESCRIPTION OF THE PRIOR ART

A pickup for accessing moving storage media records and/or reproduces information with respect to the moving storage media carrying substantially parallel information tracks, namely a turning disk, while moving in the radial direction of the disk. In the pickup, typically, one or more light beams are generated and focused onto a target or scanning spot on a layer within the disk. Readout light beams coming from the disk are projected onto a photo detector, where they are converted into electrical signals for further evaluation.

Position errors may occur in that the target spot on the medium varies relative to and around its nominal position. Position errors may occur within the layer in a tracking direction orthogonal to the direction of the information tracks and/or in a focus direction parallel to an axis orthogonal to the layer on the disk. Additional position errors, so-called tilt errors, may occur when the orientation of the disk relative to the pickup deviates from a nominal orientation. A radial tilt direction describes a rotation in a plane spanned by the tracking direction and the focus direction and a tangential tilt direction a rotation around a direction orthogonal to this plane. This is a so-called information direction, namely the direction of the tangent to the information tracks in a target spot. In order to adjust the position errors a pickup has a movable unit, a so-called actuator, with a lens.

A pickup for accessing moving storage media, referred to as an object driving device, which has a small tilt even when focusing and tracking operations are performed at the same time, is described in the US 2005/0185530 A1. The pickup has a carrier, a movable actuator with a lens and suspension means joining the carrier and the actuator carrying coils. The suspension means are constituted by elastic supporting rods, known as suspension wires, at two sides of the actuator.

The suspension wires both movably support the actuator, as well as apply currents to the coils on the actuator. The coils and the magnet configuration, all together referred to as a magnetic driving portion, initiate the movements of the actuator. The actuator is movable relatively to the carrier in the focus direction, the tracking direction and in the radial tilt direction, respectively.

The pickup has a magnet configuration connected to the carrier with at least one multipolar magnet. The multipolar magnet has two or more poles, where in a section of the multipolar magnet, which faces one of the coils, two opposing magnetic poles adjoin along a first separation line. The separation line has a first line part and a second line part, where the widths, in a direction orthogonal to the separation line, of corresponding pole parts of at least one of the adjoining magnetic poles differ.

In order to counteract unwanted torques, US 2005/0185530 A1 proposes to place the focus coils in such a way that their centre is offset, in tracking direction, from the point where the smaller of the magnetic poles adjoining at the separation line have maximum magnetic flux density. With such an arrangement, when the actuator is offset in tracking direction, the forces generated by the two focus coils will not be equal, so that a counteracting torque is generated. It may be perceived as a disadvantage that the two-sided suspension of the actuator requires a large effort.

### SUMMARY OF THE INVENTION

It is desirable to improve a pickup according to the preamble of claim 1 in order to reduce unwanted motion, such as tilt motion, which results from poles with differing widths.

According to the invention this is achieved by the features of claim 1. Possible advantageous developments of the invention are specified in the dependent claims.

A pickup for accessing moving storage media carrying substantially parallel information tracks has a carrier, a movable actuator with a lens and suspension means joining the carrier and the actuator. The actuator is movable in a focus direction and in a tracking direction. The actuator carries coils. The pickup has a magnet configuration, which is connected to the carrier, with at least one multipolar magnet having two ore more poles. In a section of the multipolar magnet, which faces one of the coils, two opposing magnetic poles adjoin along a first separation line. The separation line has a first line part and a second line part, where the widths of corresponding pole parts of at least one of the adjoining magnetic poles differ.

According to the invention at least one magnetically active element is attached to the multipolar magnet at at least one of the pole parts with different widths. The magnetically active element, which can be constituted as a magnetic element or as a magnetisable element, increases or decreases the magnetic flux. As a result, the magnet flux can be controlled by the magnetically active element in order to avoid an unwanted torque.

A magnetically active element decreasing the magnetic flux can be attached to a pole part with a larger width, while a magnetically active element increasing the magnetic flux can be attached to a pole part with a smaller width.

The magnetically active element can be constituted as a magnetisable flat piece, in particular as a metallic foil, decreasing the magnetic flux. As an alternative, the magnetically active element can be constituted as at least one sub magnet, in particular a sub multipolar magnet, increasing or decreasing the magnetic flux.

The magnetically active element can be arranged at the side of the multipolar magnet facing the coil. Alternatively, the magnetically active element can be arranged at the side of the multipolar magnet in the rear of the coil, where the magnetically active element can be arranged in an opening of a yoke facing the multipolar magnet.

Preferably a moving storage media drive is provided with a pickup according to the invention.

The carrier, being an ensemble of rigidly connected elements, does not preclude that typically the pickup as a whole, including a carrier, suspension wires and an actuator, is movable and is being moved, so that all storage locations on the medium can be accessed, in a direction orthogonal to information tracks on the storage medium. In this, accessing shall encompass reading access for reading information from the storage medium, or writing access for writing or recording information onto the storage medium, or combinations of reading and writing access.

One possible form of moving storage media is disks carrying concentric circular or spiral information tracks, with the access being of reflective type where an access light beam is being generated and focused onto the information track and a reflected light beam coming back from and being modulated by the information track is being focused onto a photo detector arrangement and being evaluated. However, it is within the scope of this invention to be used on other forms of optical recording medium having information tracks in layers, like those in card or tape form; and regardless whether the access principle is of a reflective or of a transductive type.

### BRIEF DESCRIPTION OF THE DRAWINGS

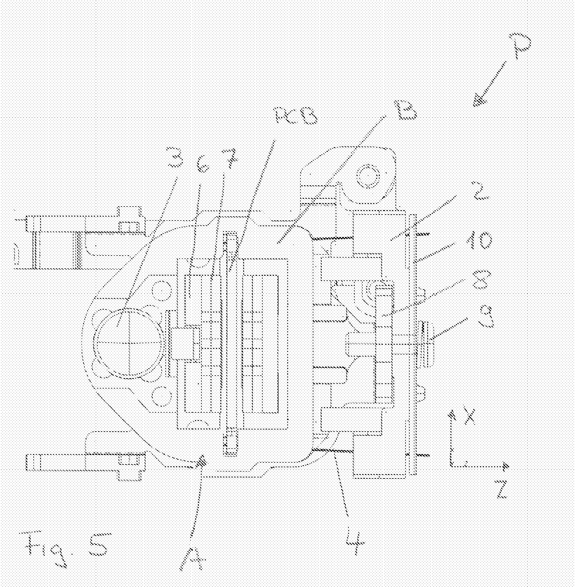

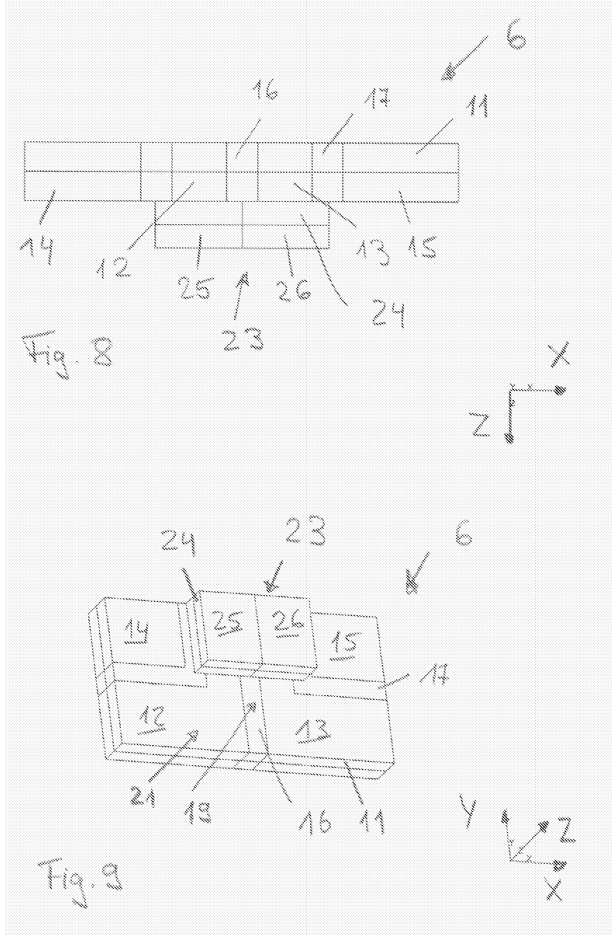

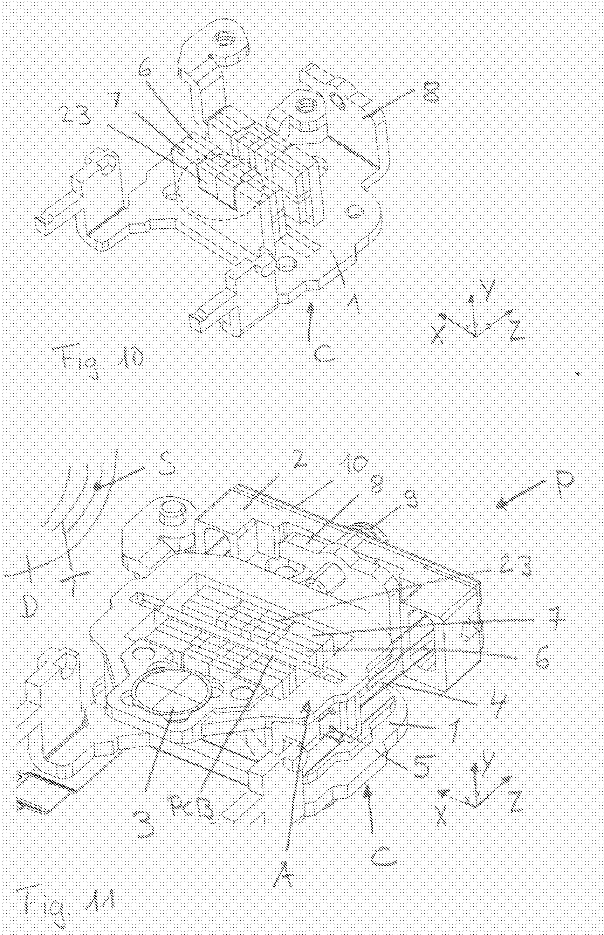

The invention will be explained in more detail using two embodiments, illustrated in Figures 1 to 11.

In the Figures:
- Figure 1: shows a simplified perspective view of a multipolar magnet with magnetic poles with different widths;
- Figure 2: shows the multipolar magnet of Figure 1 with a magnetically active element attached to the multipolar magnet according to the first embodiment of the invention;
- Figure 3: shows a simplified perspective view of a carrier with a magnet configuration with two of the multipolar magnets of Figure 2;
- Figure 4: shows a simplified perspective view of a corresponding pickup with the arrangement of Figure 3;
- Figure 5: shows a simplified top view of the pickup of Figure 4;
- Figure 6: shows a simplified front view of a multipolar magnet with magnetic north and south poles with different widths;
- Figure 7: shows the multipolar magnet of Figure 6 with a magnetically active element attached to the multipolar magnet according to the second embodiment of the invention;
- Figure 8: shows a simplified top view of the multipolar magnet of Figure 7;
- Figure 9: shows a simplified perspective view of the multipolar magnet of Figure 8;
- Figure 10: shows a simplified perspective view of a carrier with a magnet configuration with two of the multipolar magnet of Figures 8 and 9; and
- Figure 11: shows a simplified perspective view of a corresponding pickup with the arrangement of Figure 10.

### DETAILED DESCRIPTION OF THE INVENTION

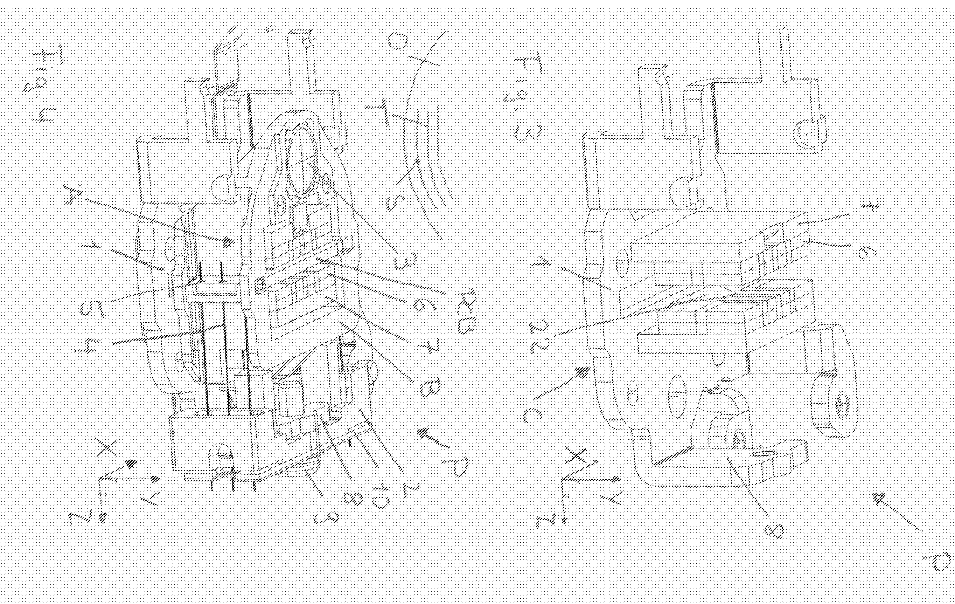

With reference to the Figures, in particular to Figure 4, a pickup P for accessing moving storage media, namely a disk D, according to the invention has a carrier C with a base 1 and a holder 2, an actuator A with a lens 3 and suspension means joining the carrier C and the actuator A. The suspension means are constituted by six suspension wires 4 extending from the rear of the carrier C.

By means of the suspension with the suspension wires 4, the actuator A with the lens 3 is able to perform focus motion in a focus direction Y orthogonal to the disk D carrying substantially circular information tracks T, shown in the Figure 4 with very enlarged, disproportionate distance. Additionally, the actuator A is able to perform tracking motion in a tracking direction X parallel to the surface of the disk D and orthogonal to the information tracks T. Additionally, the actuator A is able to perform so-called radial tilt motion by rotating around an information direction Z which is parallel to the direction of the tracks T, namely to the tangent to the information tracks T at a scanning spot S.

The actuator A comprises a frame-shaped body B carrying the lens 3 and a printed circuit board PCB, which is connected to the body B while extending orthogonal to the information direction Z through the inner opening of the body B. The printed circuit board PCB carries tracking and focus coils, which are occluded in the Figures.

The suspension wires 4 are arranged substantially parallel. They are orientated in the direction of the information tracks being scanned on the media, namely in the information direction Z. They are arranged symmetrically with respect to the body B. Three suspension wires 4 end at each of two opposite sides in the tracking direction X of the body B. The three suspension wires 4 are arranged on top of each other in the focus direction Y, at each side of the body B and are soldered with one end to protruding parts of the printed circuit board PCB by soldering points 5.

The pickup P has a magnet configuration, which is connected to the carrier C, with two multipolar magnets 6 and with two yokes 7. The yokes 7, each carrying one of the multipolar magnets 6, extend vertically from the base 1, namely in the focus direction Y. The yokes 7 with the multipolar magnets 7 are arranged in the inner opening of the body B in a way that each of the multipolar magnets 6 faces the printed circuit board PCB at one of two opposite sides in the information direction Z.

The base 1 extends in a plane orthogonal to the focus direction Y and parallel to the disk D, i.e. in the plane spanned by the tracking direction X and the information direction Z. The holder 2 is connected to a strap 8 of the base 1 by as screw 9. The holder 2 comprises a further printed circuit board 10 with soldering points for the other end of the suspension wires 4. The printed circuit board 10 is located behind the actuator A, in other words, at that side of the holder 2 which is opposite to the body B. The holder 2 is constituted by a damping block with a damping material inside, which damps the suspension wires 4 extending through the holder 2.

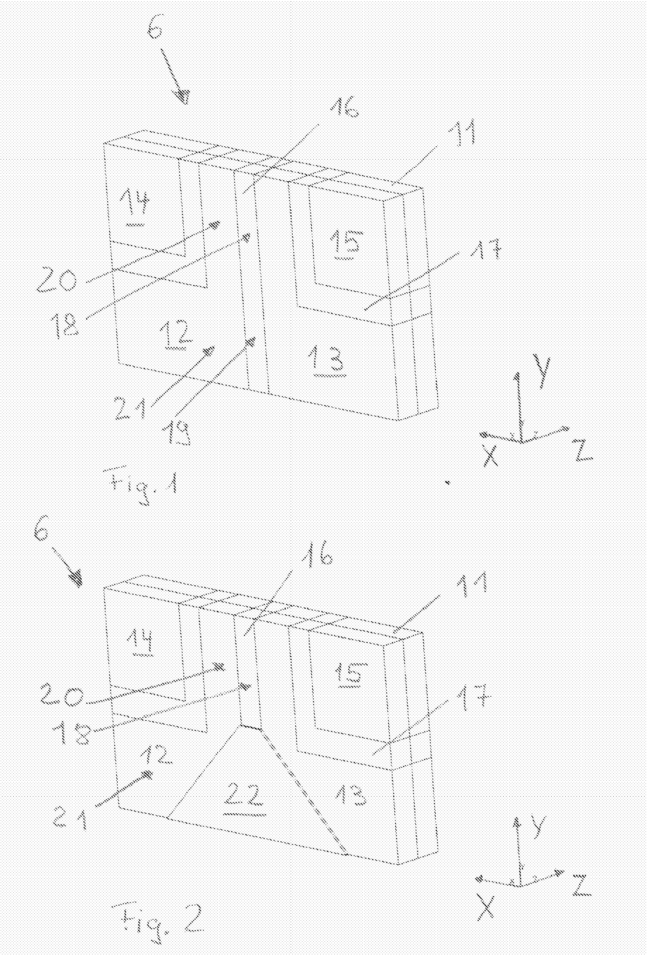

With reference to Figure 1, each of the multipolar magnets 6 comprises two plates 11, each with four poles 12, 13, 14, and 15. The poles 12 and 13 of each plate 11 are constituted as one pair of opposing poles 12, 13, which extend in focus direction Y over the plate 11 and adjoin along a first separation line 15, which extends in focus direction Y in the middle of the plate 11. The poles 14 and 15 are arranged at both upper corners of the plate 11. They are separated from the poles 12 and 13 by second L-shaped separation lines 17. The poles 12 to 15 are arranged in a way that opposing poles 12 and 13, 14 and 12, 15 and 13 are separated by the separation lines 16 and 17. The widths of the opposing poles 12 and 13, in tracking direction X, changes from a small width in an upper line part 18 of the separation line 16, at which the poles 14 and 15 are arranged, to a larger width in a lower line part 19.

The separation lines 16, 17 are neutral zones, which are shown in the Figures in a very enlarged width. Small neutral zones result and are unavoidable whenever a magnetic material is magnetised into a multipolar magnet 6 with adjoined opposing poles 12 to 15.

Each multipolar magnet 6 faces the printed circuit board PCB with e.g. three coils, which are arranged beside each other in the tracking direction X. As a result, a middle section of the multipolar magnet 6, in tracking direction, in which the opposing poles 11, 12 adjoin along the first separation line 16, faces the middle coil. In this section of the multipolar magnet 6, the widths of upper pole parts 20 of the poles 12, 13 along the upper line part 18 of the separation line 16 and the widths of lower pole parts along the lower line part 19 differ.

According to the invention one magnetically active element 22, which is constituted as a magnetisable element, is attached to each of the multipolar magnets 6 at the side of the corresponding multipolar magnet 6 facing the coil. The magnetically active element 22 is arranged at the lower pole parts 21 of the poles 12, 13 with the enlarged widths. The magnetically active element 22 partially covers the lower pole parts 21 and has a shape substantially of a triangle, of which one corner is arranged at the upper end of the lower line part 19 and the base of which extends along the lower edge of the lower poles parts 21.

The magnetically active element 22 is constituted as a magnetisable flat piece, namely as a metallic foil. It decreases the magnetic flux at the lower pole parts 21.

As an alternative, the body B can carry a flat board with attached coils.

A pickup P according to this invention can be used in the so-called slide or sled design of optical media drives, where it is shiftably fitted to a frame structure of the drive, with appropriate linear driving means for realising the shift, such as linear motors or a motor driven threaded rod. Alternatively, the pickup P according to this invention is also usable in the so-called swivel arm design, where it is pivotably mounted on the end of an arm having a pivoting axis parallel to the focus direction. In that way, the pickup P is movable across the tracks T on the surface of the disk D along an arc which has its main extension in the tracking direction X.

A second embodiment of the invention corresponds to the first embodiment except for the following features:

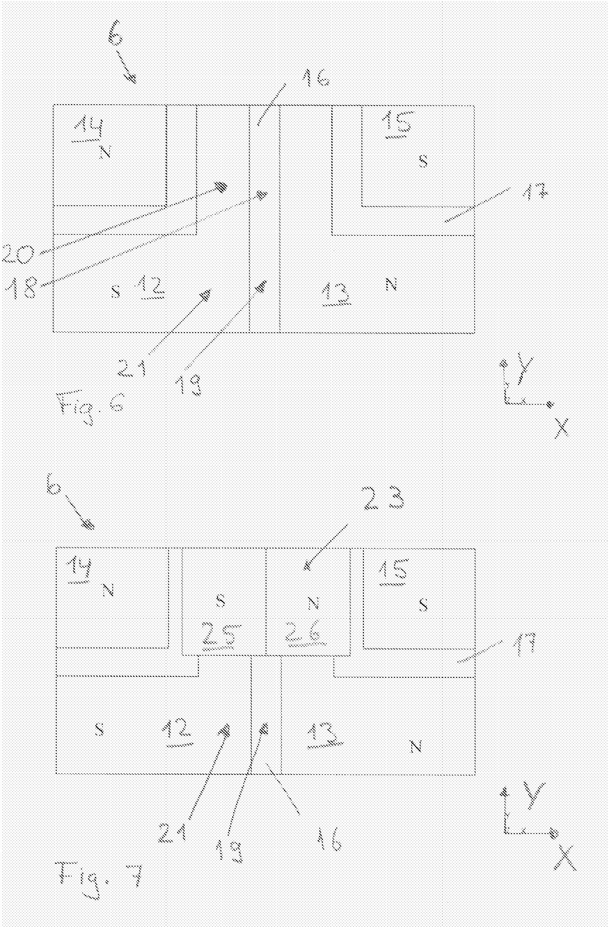

With reference to Figure 6, the poles 12 and 15 are characterised as north poles N and the poles 13 and 14 as south poles S.

According to the invention one of the magnetically active elements 23, which is constituted as a magnetic element, is attached to each of the corresponding multipolar magnets 9 at the side of the multipolar magnet 6 at the rear of the coil. The magnetically active element 23 is arranged at the upper pole parts 20 of the poles 12, 13 with the smaller widths.

The magnetically active element 23 comprises two smaller plates 24, each of which is constituted as a sub magnet with two poles 25, 26, namely a sub multipolar magnet. Each magnetically active element 23 is arranged in an opening of the corresponding yoke 7 facing the multipolar magnet 6 at the rear of the coil. It increases the magnetic flux at the upper pole parts 20.

## Claims

1. A pickup (P) for accessing moving storage media (D) carrying substantially parallel information tracks (T),
the pickup (P) having a carrier (C), a movable actuator (A) with a lens (3) and suspension means joining the carrier (C) and the actuator (A),
the actuator (A) carrying coils,
the pickup (P) having a magnet configuration connected to the carrier (C) with at least one multipolar magnet (6) having two ore more poles (12, 13, 14, 15),
where in a section of the multipolar magnet (6), which faces one of the coils, two opposing magnetic poles (12, 13) adjoin along a first separation line (16),
the separation line (16) having a first line part (18) and a second line part (19), where the widths of corresponding pole parts (20, 21) of at least one of the adjoining magnetic poles (12, 13) differ,
the pickup (P) **characterized in that** at least one magnetically active element (22, 23) is attached to the multipolar magnet (6) at at least one of the pole parts (20, 21) with different widths.

2. A pickup (P) according to claim 1, where the magnetically active element (22) is an element decreasing the magnetic flux and is attached to a pole part (21) with a larger width.

3. A pickup (P) according to claim 1 or 2, where the magnetically active element (23) is an element increasing the magnetic flux and is attached to a pole part (20) with a smaller width.

4. A pickup (P) according to claim 1 or 2, where the magnetically active element (22) is constituted as a magnetisable flat piece.

5. A pickup (P) according to claim 4, where the magnetically active element (22) is constituted as metallic foil.

6. A pickup (P) according to one of the claims 1 to 3, where the magnetically active element (23) is constituted as at least one sub magnet.

7. A pickup (P) according to one of the claims 1 to 6, where the magnetically active element (23) is arranged at the side of the multipolar magnet (6) facing the coil.

8. A pickup (P) according to one of the claims 1 to 6, where the magnetically active element (23) is arranged at the side of the multipolar magnet (6) at the rear of the coil.

9. A pickup (P) according to claim 8, where the magnetically active element (23) is arranged in an opening of a yoke (7) facing the multipolar magnet (6).

10. A moving storage media drive **characterised in that** it has a pickup (P) according to one of claims 1 to 9.
